# EUROPEAN PATENT SPECIFICATION

(11) **EP 1 409 881 B1**
(45) Date of publication and mention of the grant of the patent: **01.06.2005**
(21) Application number: 02708932.5
(22) Date of filing: 29.03.2002
(51) Int. Cl.: F16B 43/00, E04D 3/36, F16B 37/14, F16B 33/00

(54) **SCREW WITH SEAL**
SCHRAUBE MIT DICHTUNG
VIS D'ETANCHEITE

(30) Priority: 30.03.2001 SI 200100086 P
(43) Date of publication of application: 21.04.2004
(73) Proprietor: Skodnik, Anton, 5213 Kanal Ob Soci (SI); Skodnik, Damijan, 5213 Kanal ob Soci (SI)
(72) Inventor: Skodnik, Anton, 5213 Kanal Ob Soci (SI); Skodnik, Damijan, 5213 Kanal ob Soci (SI)
(74) Representative: Primozic, Alenka
(86) International application number: PCT/SI2002/000011
(87) International publication number: WO 2002/079656

(56) References cited:
- EP-A- 0 811 734
- GB-A- 2 311 113
- US-A- 3 803 972
- US-A- 4 460 300
- US-A- 5 338 141

## Description

### Subject of the invention

The subject of the invention is a screw with a seal at its head intended to be screwed into a product having a drilled hole, also a threaded hole, so tightly that precipitation water and atmospheric humidity do not penetrate beside it. A preferred embodiment foresees it as a fastening element for roof coverings, e.g. wave plates or flat plates of an optional material.

### Technical problem

The technical problem solved by the present invention is to design a screw - more precisely a screw head and a part of the shank close to it - so as to prevent corrosion of that part of the screw which is in direct contact with outer atmosphere and to achieve a tight fitting of the screw head to the foundation, whereas the characteristics of the screw with regard to its thread, resistance and tenacity remain optional.

### Prior art

PCT applications WO 96/19320, WO 96/19675, WO 96/19676 and WO 96/37344 disclose a screw forming a drilled hole and a thread, a process for screwing it into the workpiece and a device for screwing in the screw together with a washer, all by the same Swiss manufacturer, namely SFS.

US-A-5 338 141 discloses a screw with a seal according to the preamble of claim 1.

The substance of all aforementioned inventions lies in the tip of the screw shank and in the thread as well as in the device used to screw in the screw of the invention together with a washer. The seal between the screw head and the roofing in the mentioned inventions is a known elastic, preferably rubber gasket with a metallic washer placed between the screw head and the gasket. To extend the life span of the screw, it has a plastic cap, which is placed on its head after the screw has been screwed in, said cap covering the screw head, the washer and the gasket.

A disadvantage of the mentioned solution is the additional step - the placing of the cap on the screw head. Therefore this step is often omitted, which results in a greater risk for the seal to start leaking precipitation water due to the strong effect of ultraviolet light and temperature differences. It has also been known that protection caps tend to fall off after one or several seasons due to the different elasticities of the metal (screw head) and of the plastic material they are made from.

These screws consist of several parts, which is especially unwelcome at machine screwing-in because it slows it down.

Another disadvantage of such screws lies in the unscrewing where they can damage the drilled hole of the roofing because the longitudinal ribs that cut the hole at the first screwing are of such shape that they can damage the edge of the hole with their upper step-like part of the shank.

Another disadvantage of all mentioned solutions lies in the galvanic treatment of the metallic parts foreseen for anti-corrosion protection. The screwing-in often damages the galvanic covering on the screw head, which contributes to an earlier corrosion. The choice of a stainless metal for the screw would make the product more expensive, furthermore stainless metals have less suitable strength characteristics compared to regular metals foreseen for screws. The machining of stainless steels is also more demanding and for this reason they are not used for this purpose.

### Solution to the technical problem

The described technical problem is solved by a screw according to the invention having a shank provided with an optional thread and, at its free end, possibly also with a cutter for drilling a hole and a guiding point, and a head with a flange, whereat the head has a non-removable cap shaped in the centre in a way to fit any screwing-in device, preferably a standard wrench gap. The cap is preferably shaped as a geometrical spheric cap. Below the screw head the shank is tapered in the shape of a cone and then it has several radially running rings on the cylindrical section between the head and the thread. The seal is factory-placed on the shank in the area of the above-mentioned rings. It is shaped like a lens rotary body with a convex upper surface i.e. the head-adjacent surface, and a concave lower surface i.e. the thread-adjacent surface. On the convex side of the seal there is a rigid washer sealed by two rings at the shank and by its outer edge towards the cap so as to prevent the penetration of precipitation water and humidity, which would otherwise cause corrosion of the metallic washer. The rigid washer assures an equal distribution of the axial force to the seal, which force is caused by the screwed-in screw. Further, the concave side of the seal has several radially arranged wings protruding from the outer edge of the washer which, during the screwing-in of the screw, remove the scrapings caused by drilling holes into the roofing. A tight fitting of the seal to a clean surface prevents the formation of gaps, which would leak precipitation water and humidity towards the screw. The wings get bent and the concave part of the seal covers them completely.

To assure the non-corrosivity of the outer part of the screw, the cap is made of a non-corrosive material, preferably stainless steel, whereas the rest of the screw is made from any corrosive material, preferably steel, which is galvanised.

The seal can additionally contain a liquid or paste-like agent for additional sealing.

The invention will be explained in more detail in the continuation with a description of two embodiments and the enclosed drawing showing:
Fig. 1 an elevation of a screw according to the first embodiment of the invention,
Fig. 2 a cross-section of the same screw,
Fig. 3 a cross-section of a screw according to the second embodiment.

A screw with a seal, preferably intended for a tight fastening of objects so as to prevent precipitation water and atmospheric humidity from penetrating beside the screw, preferably for fastening roofings, consists of a shank 1, a head 2, a cap 3 and a seal 4.

If necessary, the shank 1 is at its free end executed with a guide point 5 continuing into a thread 6 which can also be self-boring. At the beginning of the thread 6 at the very point 5 there may be a cutting section 7 shaping a drilled hole.

On the opposite end, on the shank 1 the head 2 with a flange 8 is executed with the shank 1 continuing into the head via a conical enlargement 9 broadening towards the head 2. On the head 2 there is a preferably fixed cap 3, preferably shaped as a spherical shell, whose concave part is adjacent to the thread 6 and fits the flange 8 of the head 2, whereas at the same time it covers the head 2 in a way to fit the screwing device, preferably being of a hexagonal shape for the standard gap of a wrench. The concave side of the cap 3 is equipped with a seal 4, which is also basically shaped as a spherical shell and is, with its central drilled hole 10, placed on the shank 1 in an axis-sliding, rotating and tight manner. On the convex side adjacent to the cap 3, there is a flange I 1 near the drilled hole 10 and, concentrically with it, a ring 12 arranged in the area of the outer diameter of the cap. Between the flange 11 and the ring 12, a washer 13 is placed on the seal 4. On the lower concave side adjacent to the thread 6, the seal 4 has radially directed wings 14 protruding from the fictitious plane of the outer edge 15 of the seal 4, which wings can be bent when fitting the seal 4 on the foundation, e.g. roofing.

In the area of the drilled hole 10 in the seal 4, there may be an additional liquid or paste-like sealing agent 10', which is activated upon screwing-in in such a way that, due to the increased pressure upon the seal 4, it is pressed from its location towards the drilled hole, thus providing additional sealing.

On the shank 1 between the head 2 and the thread 6 there are arranged radial rings 16 positioning and dismountably fixing the seal 4 with the washer 13 on the screw at a distance from the cap 3 on the screw when the latter is intended to be screwed in. Preferably, the screw in such position is already the market product.

On the shank 1 between the thread 6 and the rings 16 there are executed axially running ribs 17 continuously decreasing towards the mantle of the shank 1 both on the side of the thread 6 and on the side of the rings 16. These ribs are foreseen as additional drillers for the drilled hole in the fastened object, preferably roofing. With the screw being entirely screwed-in, the surface of the fastened object - roofing - lies directly under the enlargement 9 and above the rings 16, where the shank diameter is smaller than the diameter defined by the ribs 17. This contributes to the clearance in the drilled holes of the fastened object due to temperature dilatations. When the screw is unscrewed, the decreasing ribs 17 on the side of the enlargement 9 assure free unscrewing without damaging the edge of the drilled hole in the roofing or lifting it.

The screw is preferably manufactured from stainless steel, the same goes for the cap. The seal is made from rubber resistant to weather conditions, temperatures and ultraviolet light. The screw is manufactured in compliance with known methods of manufacture, the seal is made according to the methods known in rubber industry.

In a special embodiment which is not shown in the drawing, the shank 1 and the cap 3 may be executed in one piece so that the cap contains an external hexagon for the gap of the wrench, under the cap 3 there is the shank 1 with the enlargement 9, whereas the head 2 with the flange 8 is no longer needed.

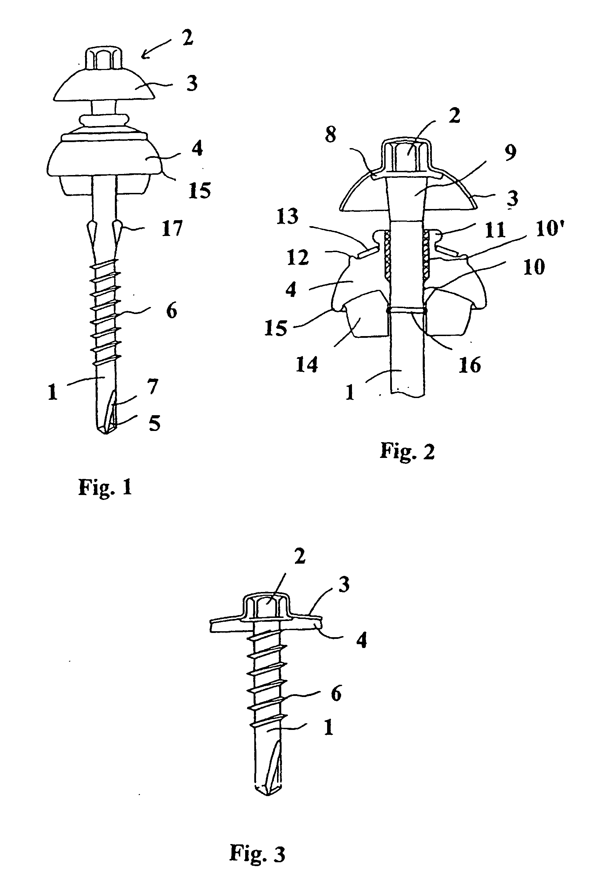

In another embodiment shown in Fig. 3, on the head 2 there is the cap 3 that is flattened and underneath it there is the standard seal 4 on the shank 1. The essence of this embodiment lies in that the cap 3 - which is usually made from a stainless material - covers the screw head and the seal 4 prevents any contact of the outer atmosphere with the screw shank that is less resistible to corrosion.

It can be understood that a man skilled in the art by knowing the essence of the invention defined in the enclosed patent claims can also conceive screws for other purposes and/or with a different thread and tip and also made from another material or having another surface protection without circumventing the characteristics of the invention defined in the enclosed claims.

## Claims

1. A screw with a seal, preferably intended for a tight fastening of objects so as to prevent precipitation water and atmospheric humidity from penetrating beside the screw, preferably for fastening roofings, said screw consisting of a shank (1), a head (2), a cap (3) and a seal (4), whereat the shank (1) is at its free end provided with a guide point (5) continuing into a thread (6), at the beginning of the thread (6) at the very point (5) there may be a cutting section (7), and on the opposite end on the shank (1) the head (2) with a flange (8) is provided with the shank (1) continuing into the head (2) via a conical enlargement (9) broadening towards the head (2) **characterized in that** the concave side of the cap (3) is equipped with a seal (4) shaped as a shell, preferably as a spherical one with a central drilled hole (10), whereat on the convex side adjacent to the cap (3) there is a flange (11) near the drilled hole (10) and, concentrically with it, a ring (12) in the area of the outer diameter of the cap, between the flange (11) and the ring (12) there is a washer (13) placed on the seal (4), while on the lower concave side adjacent to the thread (6), the seal (4) has radially directed wings (14) protruding from the fictitious plane of the outer edge (15) of the seal (4).

2. A screw according to claim 1, **characterized in that** in the hole (10) of the seal (4), the shank (1) is placed in an axis-sliding, rotating and tight manner.

3. A screw according to claims 1 to 2, **characterized in that** in the hole (10) of the seal (4) there may be an additional liquid or paste-like sealing agent (10').

4. A screw according to claims 1 to 3, **characterized in that** on the shank (1) between the head (2) and the thread (6) there is arranged at least one radial ring (16) positioning and dismountably fixing the seal (4) at a distance from the cap (3) on the screw when the latter is intended to be screwed in.

5. A screw according to claims 1 to 4, **characterized in that** on the shank (1) between the thread (6) and the rings (16) there are arranged axially running ribs (17) continuously decreasing towards the ends of the shank (1) both on the side of the thread (6) and on the side of the rings (16).

## Patentansprüche

1. Schraube mit einer Dichtung, die vorzugsweise für ein dichtes Befestigen von Objekten vorgesehen ist, vorzugsweise zum Befestigen von Bedachungen, um Niederschlag-Wasser und atmosphärische Feuchtigkeit am Durchdringen neben der Schraube zu hindern, wobei die Schraube einen Schaft (1), einen Kopf (2), eine Kappe (3) und eine Dichtung (4) aufweist und der Schaft (1) an seinem freien Ende mit einer Führungsstelle (5) ausgestattet ist, die in ein Gewinde (6) übergeht, wobei am Anfang des Gewindes (6) an der vordersten Stelle (5) ein Schneidabschnitt (7) sein kann und an dem entgegengesetzten Ende des Schafts (1) der Kopf (2) mit einem Bund (8) vorgesehen ist, wobei der Schaft (1) über eine konische Vergrößerung (9), die sich in Richtung des Kopfes (2) verbreitert, in den Kopf (2) übergeht, **dadurch gekennzeichnet, dass** die konkave Seite der Kappe (3) mit einer Dichtung (4) versehen ist, die wie eine Schale geformt ist, vorzugsweise wie eine sphärische Schale mit einem zentralen gebohrten Loch (10), wobei an der konvexen Seite an die Kappe (3) angrenzend ein Flansch (11) in der Nähe des gebohrten Lochs (10) und konzentrisch dazu ein Ring (12) in dem Bereich von dem äußeren Durchmesser der Kappe ausgebildet ist, wobei zwischen dem Flansch (11) und dem Ring (12) eine Scheibe (13) vorgesehen ist, die auf der Dichtung (4) platziert ist, wobei auf der unteren konkaven Seite an das Gewinde (6) angrenzend die Dichtung (4) radial ausgerichtete Flügel (14) aufweist, die sich von der fiktiven Ebene des äußeren Randes (15) der Dichtung (4) aus erstrecken.

2. Schraube nach Anspruch 1, **dadurch gekennzeichnet, dass** in dem Loch (10) der Dichtung (4) der Schaft (1) in einer axial gleitfähigen, drehbaren und dichten Art und Weise platziert ist.

3. Schraube nach Anspruch 1 oder 2, **dadurch gekennzeichnet, dass** in dem Loch (10) der Dichtung (4) zusätzliche eine Flüssigkeit oder ein pastenartiges Dichtungsmittel (10') sein kann.

4. Schraube nach einem der Ansprüche 1 bis 3, **dadurch gekennzeichnet, dass** auf dem Schaft (1) zwischen dem Kopf (2) und dem Gewinde (6) zumindest ein radialer Ring (16) angeordnet ist, der die Dichtung (4) in einem Abstand von der Kappe (3) auf der Schraube positioniert und abmontierbar fixiert, wenn die letztere eingeschraubt werden soll.

5. Schraube nach einem der Ansprüche 1 bis 4, **dadurch gekennzeichnet, dass** auf dem Schaft (1) zwischen dem Gewinde (6) und den Ringen (16) axial verlaufende Rippen (17) angeordnet sind, die in Richtung der Enden des Schafts (1) sowohl auf der Seite des Gewindes (6) als auch auf der Seite der Ringe (16) kontinuierlich kleiner werden.

## Revendications

1. Vis dotée d'un joint d'étanchéité, de préférence destinée à fixer de manière serrée des objets pour empêcher l'eau de pluie et l'humidité atmosphérique de pénétrer à côté de la vis, de préférence pour fixer des revêtements de toiture, ladite vis étant constituée d'une tige (1), d'une tête (2), d'un capuchon (3) et d'un joint d'étanchéité (4), la tige (1) étant dotée à son extrémité libre d'un point de guidage (5) qui se prolonge en un filet (6), une partie de coupe (7) pouvant être prévue au début du filet (6) exactement sur la pointe (5), la tête (2) étant dotée d'un rebord (8) à l'extrémité opposée de la tige (1) et la tige (1) se prolongeant en la tête (2) par l'intermédiaire d'un évasement conique (9) qui s'élargit vers la tête (2), **caractérisée en ce que** le côté concave du capuchon (3) est doté d'un joint d'étanchéité (4) qui présente la forme d'une coquille, de préférence d'une coquille sphérique dotée d'un trou foré central (10), un rebord (11) étant prévu sur le côté convexe en position adjacente au capuchon (3) et à proximité du trou foré (10) et un anneau (12) étant prévu concentriquement par rapport à ce dernier dans la zone du diamètre externe du capuchon, une rondelle (13) étant placée sur le joint d'étanchéité (4) entre le rebord (11) et l'anneau (12), tandis que sur le côté concave inférieur, le joint d'étanchéité (4) présente en position adjacente au filet (6) des ailes (14) orientées radialement qui débordent du plan imaginaire du bord externe (15) du joint d'étanchéité (4).

2. Vis selon la revendication 1, **caractérisée en ce que** la tige (1) est placée de manière serrée et de manière à pouvoir coulisser dans l'axe et pivoter dans le trou foré (10) du joint d'étanchéité (4).

3. Vis selon les revendications 1 ou 2, **caractérisée en ce qu'**un liquide supplémentaire ou un agent d'étanchéité (10') du type en pâte peuvent être prévu dans le trou foré (10) du joint d'étanchéité (4).

4. Vis selon les revendications 1 à 3, **caractérisée en ce qu'**au moins un anneau radial (16) qui positionne et qui fixe de manière démontable le joint d'étanchéité (4) à distance du capuchon (3) de la vis lorsque cette dernière doit être vissée est agencé sur la tige (1) entre la tête (2) et le filet (6).

5. Vis selon les revendications 1 à 4, **caractérisée en ce que** des nervures (17) qui s'étendent axialement sur le côté du filet (6) et sur le côté des anneaux (16) et qui diminuent de manière continue vers les extrémités de la tige (1) sont agencées sur la tige (1) entre le filet (6) et les anneaux (16).
